(19)

Europäisches
Patentamt
European
Patent Office
Office européen
des brevets

(11) **EP 4 672 685 A1**

(12) **EUROPEAN PATENT APPLICATION**

(43) Date of publication:
31.12.2025 Bulletin 2026/01

(21) Application number: 24290022.3

(22) Date of filing: 25.06.2024

(51) International Patent Classification (IPC):
*H04L 27/26* (2006.01)    *H04W 52/32* (2009.01)

(52) Cooperative Patent Classification (CPC):
**H04L 27/2697; H04L 27/26035; H04L 27/26134;**
**H04L 27/2634; H04L 27/2639**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Mitsubishi Electric R&D Centre Europe**
**B.V.**
**1119 NS  Schiphol Rijk Amsterdam (NL)**

(72) Inventors:
• **Ciochina, Cristina**
  **35000 RENNES (FR)**
• **Corlay, Vincent**
  **35708 RENNES CEDEX 7 (FR)**

(74) Representative: **Plasseraud IP**
**104 Rue de Richelieu**
**CS92104**
**75080 Paris Cedex 02 (FR)**

(54)    **NEW FREQUENCY-TIME DOMAIN PILOT SCHEMES TO ESTIMATE THE CHANNEL IN THE**
**DELAY-DOPPLER DOMAIN**

(57)    The invention relates to a communication method, comprising:
determining a composite signal, the composite signal representing a sum of symbols associated with frequency-time resources and of a pilot representative of at least one pulse in a delay-Doppler domain;
wherein the symbols associated with frequency-time resources comprise at least data symbols and transmitting the composite signal through a radio channel.

FIG. 3

## Description

### Technical Field

This disclosure pertains to the field of telecommunications.

The disclosure more particularly relates to a communication method, a computer-readable medium, a signal transmitter, a signal receiver and a communication system.

### Background Art

In the field of telecommunications, efficient and accurate signal transmission and reception are a permanent concern. The characterization of radio channels contributes to achieving this efficiency, as it directly impacts the quality and reliability of communication systems.

Among the various possible domains to represent radio channels, the delay-Doppler (DD) domain has unique properties and advantages.

A key advantage of the DD domain is its time-invariance, provided that the characteristics of the radio propagation paths remain unchanged. This aspect ensures consistency and predictability in signal transmission.

Furthermore, the DD domain typically involves a lower number of parameters than other domains when the channel comprises a limited number of paths, simplifying the channel representation.

It contains a low number of parameters if the channel is composed of a reduced number of paths.

The ability to detect range (through delays) and speed (through Doppler shifts) of reflectors makes the DD domain well-suited for radar-like sensing operations, adding versatility to its applications.

Recently, a new waveform called Orthogonal Time Frequency Space (OTFS) was proposed in the literature. This waveform transmits the data in the DD domain. The channel estimation is also performed in the DD domain. OTFS offers efficient channel estimation due to its ability to concentrate total pilot power on a minimal number of coefficients, especially when the impulse response is sparse in the DD domain. This results in a high signal-to-noise ratio (SNR). However, transmitting data symbols in the same domain increases the complexity of symbol detection. Moreover, the standard pilot scheme necessitates a guard interval of null symbols, determined by the maximum Doppler and delay rather than the channel's sparsity.

In contrast, the standard frequency-time (FT) domain Orthogonal Frequency-Division Multiplexing (OFDM) waveform simplifies symbol detection. Nevertheless, this approach also demands channel estimation in the frequency domain, which does not capitalize on the sparsity of the channel in the DD domain, potentially leading to excessive pilot overhead in some scenarios.

Despite these advancements, there remains a need for a method that effectively balances the complexities of symbol detection and channel estimation.

### Summary

This disclosure improves the situation.

It is proposed a communication method, comprising:

determining a composite signal, the composite signal representing a sum of symbols associated with frequency-time resources and of a pilot representative of at least one pulse in a delay-Doppler domain; wherein the symbols associated with frequency-time resources comprise at least data symbols and

transmitting the composite signal through a radio channel.

In the context of the present document:

- the delay-Doppler domain is a representation of the signal where delays (time shifts) and Doppler shifts (frequency shifts due to relative motion) are explicitly considered,
- frequency-time resources are physical channels or physical signals which symbols may be allocated to within the frequency and time domains used for communication.

The proposed communication method allows efficient use of the frequency-time and delay-Doppler domains, potentially improving the accuracy of channel estimation and overall communication efficiency.

In an example, at least one said pulse has a power in the delay-Doppler domain which is a function of at least one of:

a total power of the symbols,
a modulation and coding scheme associated with the symbols,
a resource allocation parameter associated with the symbols,
an indicator representative of a distribution of power of a representation in the delay-Doppler domain of the sum of the symbols,
an observed or computed channel condition,
a target normalized mean square error of an estimate of the channel, and
an expected power of a channel impulse in the delay-Doppler domain.

Adjusting the power of the pulse based on one or more of these parameters can enhance the robustness and adaptability of the communication method, improving performance under varying channel conditions.

In an example, at least one said pulse has a position in the delay-Doppler domain which depends on at least one of:

a characteristic of a block of data to be transmitted through the radio channel,
a location in the delay-Doppler domain where a power of the symbols is lowest at a pre-determined position, and
a location in the delay-Doppler domain where an average power of the symbols is lowest within a predetermined area
a location in the delay-Doppler domain related to a power distribution of the symbols.

This flexibility in positioning the pulse allows for more efficient use of the delay-Doppler domain, potentially reducing interference and optimizing signal clarity.

In an example, for each pulse, the symbols are punctured or attenuated at one or more locations of puncturing or attenuation related to a location of a pulse in the delay-Doppler domain.

Puncturing or attenuating symbols can minimize interference and improve the accuracy of channel estimation by focusing the signal energy where it is most needed.

In an example, the symbols are based on an OFDM-based waveform.

OFDM waveforms have numerous known advantages in terms of communication performance, including high spectral efficiency and robustness against frequency-selective fading.

In an example, the symbols are further punctured or reduced at one or more additional locations distinct from and unrelated to a location of a pulse in the delay-Doppler domain.

Additional puncturing can provide various technical advantages, for instance by facilitating interference management and/or by contributing to signal optimization for different channel conditions.

In an example, the at least one of the one or more additional locations has a position which depends on a path parameter of a radio path between a transmitter of the composite signal and a receiver of the composite signal.

Tailoring puncturing based on path parameters allows for dynamic adaptation to the specific transmission environment, enhancing the resilience and performance of communication links.

In an example, the composite signal corresponds to a transmission frame comprising a first part and a second part, and wherein the sum of the symbols and of the representation of the pulse extends throughout the first part of the transmission frame and does not extend to the second part of the transmission frame.

This separation within the transmission frame can help manage interference and allows for more efficient use of the transmission medium.

In an example, the symbols associated with frequency-time resources comprise a reference signal acting as a reference in the frequency-time domain.

Including a reference signal helps with synchronization and accurate channel estimation.

In an example, at least one of:

- a power and/or a position of the reference signal in the frequency-time domain, and
- a power and/or a position of the pulse in the delay-Doppler domain

is based on an observed channel condition.

Adapting the power and/or the position based on observed channel conditions allow for dynamic communication optimization, enhancing performance under varying conditions.

It is further proposed a computer-readable medium storing instructions that, when executed by a processor, cause the processor to perform the above method.

It is further proposed a signal transmitter configured to

determine a composite signal in a frequency-time domain, the composite signal representing a sum of data symbols associated with frequency-time resources and of a pilot representative of at least one pulse in a delay-Doppler domain; and

transmit the composite signal through a radio channel.

It is further proposed a signal receiver configured to receive the composite signal transmitted by the above signal transmitter and to estimate the communication channel in the delay-Doppler domain based on the composite signal.

It is further proposed a communication system comprising the above signal transmitter and the above signal receiver.

It is further proposed a computer program comprising instructions which, when the program is executed by a computer, cause the computer to carry out the above method.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general-purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

## Brief Description of Drawings

Other features, details and advantages will be shown in the following detailed description and on the figures, on which:

**Fig. 1**

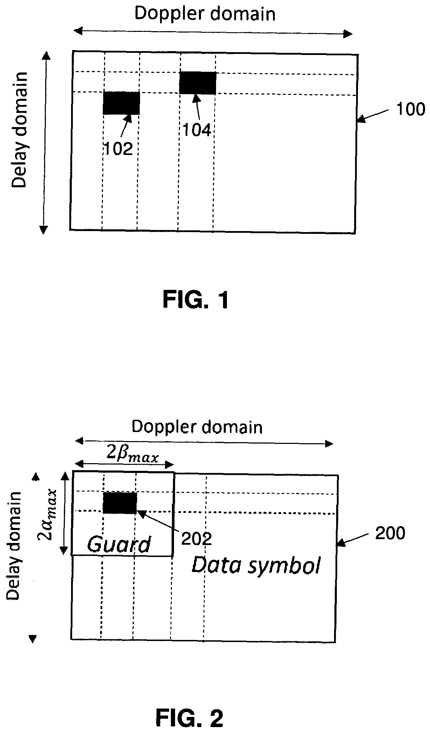

[Fig. 1] illustrates a channel impulse response with two paths in the delay-Doppler domain.
**Fig. 2**
[Fig. 2] illustrates a baseline OTFS pilot scheme inserted in a position denoted $(\alpha_1, \beta_1)$.
**Fig. 3**

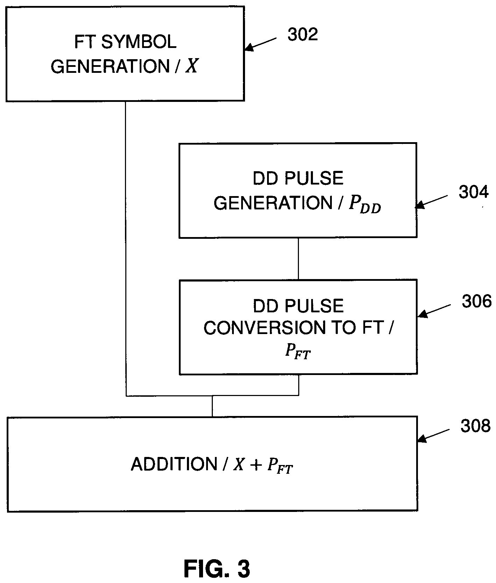

[Fig. 3] illustrates an example implementation of a pilot insertion scheme.
**Fig. 4**

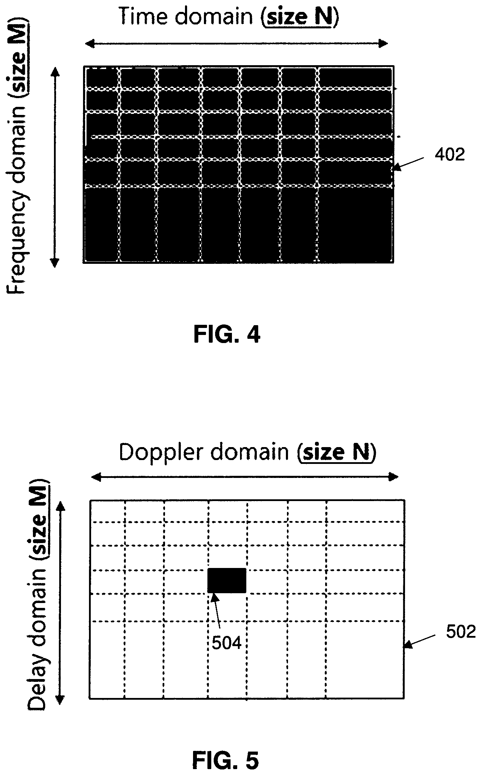

[Fig. 4] illustrates an OFDM block in the FT domain.
**Fig. 5**
[Fig. 5] illustrates a pulse in the DD domain.
**Fig. 6**

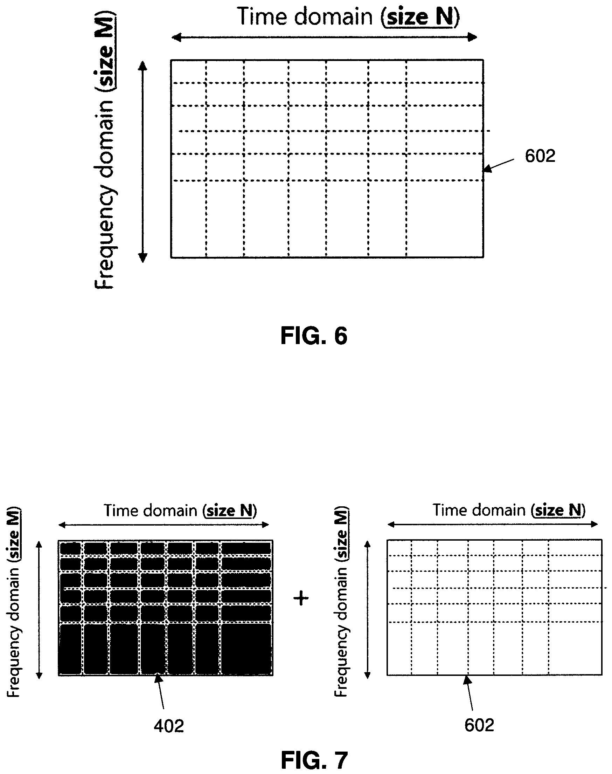

[Fig. 6] illustrates a result of converting the pulse of [Fig. 5] in the FT domain.
**Fig. 7**
[Fig. 7] illustrates an addition of the converted pulse of [Fig. 6] with the OFDM block of [Fig. 4].
**Fig. 8**

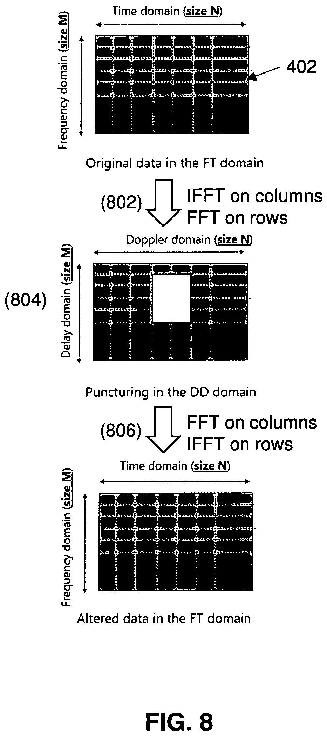

[Fig. 8] illustrates an example implementation of a pilot insertion scheme including a puncturing scheme.
**Fig. 9**

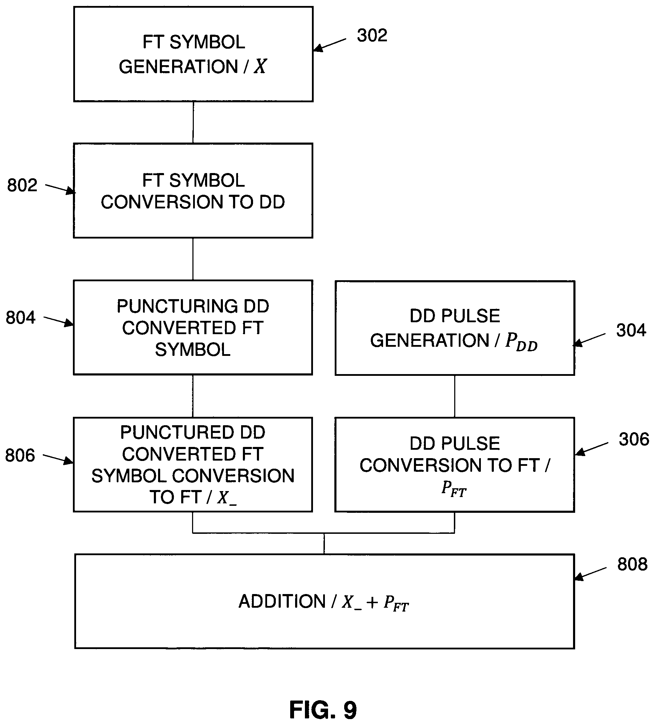

[Fig. 9] illustrates an example puncturing scheme applicable to the pilot insertion scheme of [Fig. 8].
**Fig. 10**

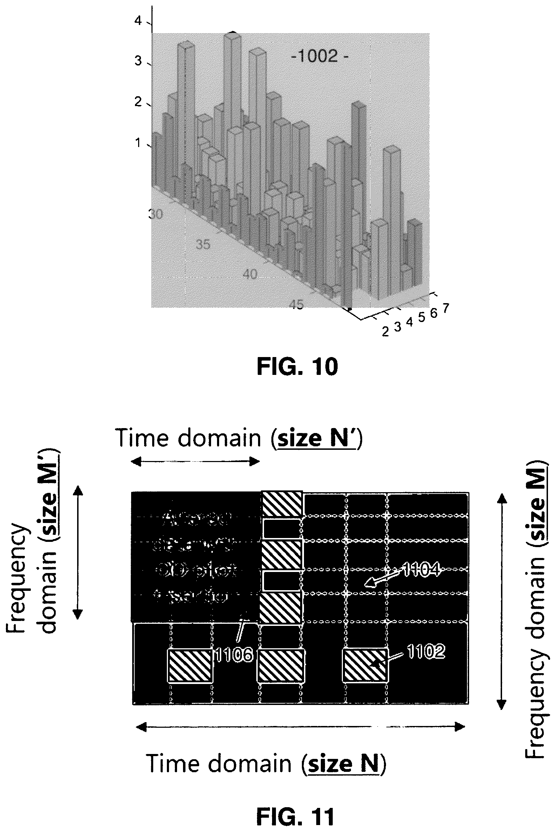

[Fig. 10] illustrates a power distribution in the DD domain of an OFDM block.
**Fig. 11**
[Fig. 11] illustrates an example of combined use, in a frame, of a pilot as a pulse in the DD domain and of reference signals in the FT domain.

**Fig. 12**

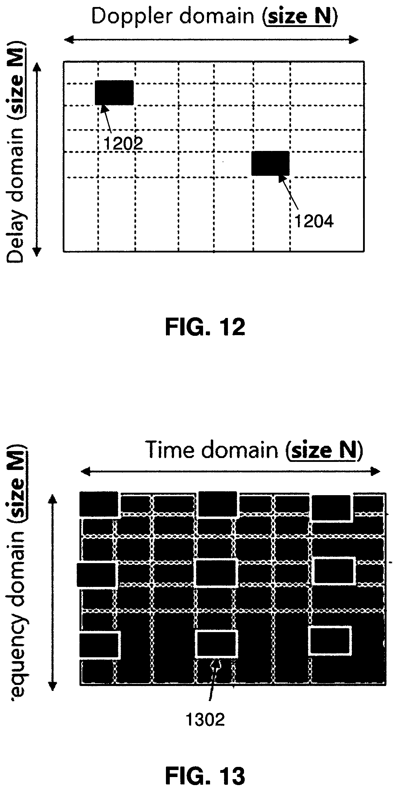

[Fig. 12] illustrates an example of insertion of a pilot signal comprising a plurality of pulses in the DD domain.
**Fig. 13**
[Fig. 13] illustrates an example OFDM pilot scheme.

**Description of Embodiments**

In the field of telecommunications, particularly in signal transmission and reception, the estimation of channel characteristics is a permanent challenge. Traditional methods often focus on estimating the channel in the frequency-time (FT) domain, but this approach has limitations, particularly in exploiting the channel's sparsity in the delay-Doppler (DD) domain.

The present disclosure proposes a novel pilot scheme, applicable to frequency-time waveforms like standard OFDM or its pre-coded variants, to efficiently estimate the channel in the delay-Doppler domain. This new approach aims to enable effective channel estimation and/or efficient tracking/sensing operations, providing an estimation in the same domain as the OTFS waveform while retaining the standard OFDM or SC-OFDM waveform, for example.

A possible procedure for implementing the aforementioned pilot scheme comprises: generating a high energy pulse in the DD domain,

converting the high energy pulse into the FT domain to obtain a converted pulse, and adding the converted pulse with frequency-time waveforms of a frequency-time domain signal to obtain a composite signal which may then be transmitted through a multipath radio channel.

Applying the converted pulse atop the frequency-time waveforms of the frequency-time domain signal may simply involve adding the converted pulse to these waveforms.

In a variant of the procedure, applying the converted pulse atop the frequency-time waveforms of the frequency-time domain signal comprises:

converting the frequency-time domain signal into the DD domain to obtain a converted signal,
puncturing i.e. nulling signal values or attenuating signal values of the converted signal around the location of the high energy pulse to obtain a punctured or attenuated signal,
converting the punctured or attenuated signal back to the FT domain to obtain a modified frequency-time domain signal, and
adding the converted pulse to the frequency-time waveforms of the modified frequency-time domain signal.

$$F_N = \left\{ e^{\frac{j 2 \pi k l}{N}} \right\}_{k,l=0}^{N-1}$$

The notations used in this document include $F_N = \left\{ e^{\frac{j 2 \pi k l}{N}} \right\}_{k,l=0}^{N-1}$ representing the N-point IDFT matrix, $I_N$ as the N-dimensional identity matrix, $\otimes$ denoting the Kronecker product, and $\odot$ indicating the component-wise product. Additional specific notations and equations are further detailed throughout this document.

_Delay-Doppler domain channel_

The following discussion assumes an application of the present disclosure to transmission through a multipath radio channel with mobility of either the transmitter, the receiver, or reflectors.

Each path $p$ in this channel may be characterized by several parameters:

a delay $\tau_p$, corresponding to a signal travel time for said path.

a Doppler frequency $\nu_p = \frac{v_r}{\lambda}$ corresponding to a frequency shift for said path, where $v_r$ is the relative velocity and $\lambda$ the wavelength of the carrier frequency, and
a complex attenuation coefficient $h_p$ for said path.

Considering a transmitted signal s(t), the received signal r(t) is expressed as follows,

$$r(t) = \int \int h(\tau, \nu) s(t - \tau) e^{j 2 \pi \nu (t - \tau)} \, d\tau \, d\nu + w(t)$$

where w(t) represents the noise $w \sim CN(0, \sigma^2)$ and $h(\tau, \nu)$ denotes the channel impulse response in the DD domain, which can be calculated as $h(\tau, v) = \sum_{p=1}^{P} h_p \delta(t - \tau_p) \delta(v - v_p)$ .

The parameter P represents the total number of propagation paths within the channel. The channel impulse response, when considered within the DD domain, exhibits time-invariant properties, provided that these propagation paths remain unchanged. This aspect of time invariance contrasts with the channel response observed in alternative domains, such as the frequency-time domain.

Regarding the discretization of delay and Doppler values, the following parameters are defined. *M* and *N* represent the size of the FFT/IFFT used by the transmitter and receptor in the delay/frequency and time/Doppler domain, respectively. The possible delay and Doppler values as $\tau_p = \frac{\alpha_p}{M \Delta f}$ and $v_p = \frac{\beta_p}{NT}$, where $\alpha_p$, $\beta_p$ are integers with $0 \leq \alpha_p \leq M$-1, $0 \leq \beta_p \leq N$ - 1 and $T = \frac{1}{\Delta f}$ is the symbol duration.

The sampling frequency $f_s = \frac{M}{T}$ of the received signal is chosen such that the above equation for calculating the channel impulse response in the DD domain can be re-expressed as $h[\alpha, \beta] = \sum_{\{p=1\}}^{P} h_p \, \delta(\alpha - \alpha_p) \delta(\beta - \beta_p)$ to accommodate these discretizations.

This allows effectively representing the channel impulse response over a 2D delay-Doppler (DD) grid as

$$\{\Gamma = \left(\frac{\alpha}{M}, \frac{\beta}{N}\right), \alpha = 0, \dots, M - 1, \beta = 0, \dots, N - 1\}$$

and distinctly identifying each path by a corresponding three-parameter set $\{h_p, \alpha_p, \beta_p\}$, where $\alpha_p$ and $\beta_p$ are strictly positive integers, or taps, which maximum values $\alpha_{max}$ and $\beta_{max}$ correspond to the maximum delay and Doppler shifts, respectively.

Illustrating these concepts, it is referred to Figure 1 which exhibits an example of an impulse response 100 with two paths in the DD domain.

This specific example is characterized by $P = 2$ paths identified by a parameter set 102 of the first path, $\{h_1 = 1, \alpha_1 = 3, \beta_1 = 2\}$, and a parameter set 104 of the second path, $\{h_2 = 1, \alpha_2 = 2, \beta_2 = 4\}$.

*Relations between the channel representations*

Relations between different channel representations are now presented. For the sake of simplification, a noise-free environment is assumed.

Using a cyclic prefix (CP) for each block of size *M* to ensure the circularity over each block and considering the sampled time-domain signal, the expression of *r(t)* becomes

$$r[t = k + Ml] = \sum_{\{p=1\}}^{P} h_p \, e^{j2\pi \frac{t\beta_p}{N'}} s\left(Ml + [k - \alpha_p]_M\right),$$

where $[.]_M$ means mod M and $N' = M \times N$. If one block of size *M* has a small enough duration, the Doppler shift may be assumed to be quasi-constant over one block such that the expression of *r(t)* becomes

$$r[t = k + Ml] = \sum_{\{p=1\}}^{P} h_p \, e^{j2\pi \frac{l\beta_p}{N}} s\left(Ml + [k - \alpha_p]_M\right),$$

where *N'* is replaced by *N*.

In matrix form, this can be expressed as $r = H^{DT} s$, with $r, s \in C^{MN \times 1}$, and $H^{DT} \in C^{MN \times MN}$ is the channel in the delay-time (DT) domain expressed as

$$H^{DT} = \sum_{\{p=1\}}^{P} h_p \, \Delta^{\beta_p} \, \pi^{\alpha_p} \ ,$$

where $\Delta = diag[z^0, \dots, z^0, z^1, \dots, z^1, \dots, z^{N-1}, \dots, z^{N-1}]$, $z = e^{j\frac{2\pi}{N}}$, each value being repeated M times, and $\pi$ is a forward shift matrix.

Then, the channel in the FT domain is obtained as:

$$H^{FT} = \frac{1}{M} (I_N \otimes F_M)H^{DT} (I_N \otimes F_M^H) = \sum_{\{p=1\}}^{P} h_p \, \Delta^{\beta_p} D^{\alpha_p} \; ,$$

where $D^{\alpha p}$ is a periodic diagonal matrix with $D^{\alpha_p}(i,i) = e^{j \, 2 \, \pi \, [i]_M \frac{\alpha_p}{M}}$ . Thus, $H^{FT}$ is also a diagonal matrix. Hence, if $H^{FT}$ is reshaped in a matrix $\Lambda^{FT}$ of size M $\times$ N, then $\Lambda^{FT}$ is expressed as

$$\Lambda^{FT}[l,k] = \sum_{p} h_p e^{j \, 2 \, \pi \, k \frac{\beta_p}{N}} e^{-j \, 2 \, \pi \, l \frac{\alpha_p}{M}}$$

where $0 \le l \le$ M - 1, $0 \le k \le$ N - 1.

Finally, the channel in the DD domain $H^{DD} \in C^{MN \times MN}$ can be obtained from $H^{DT}$ as follows

$$H^{DD} = \frac{1}{N} (F_N \otimes I_M)H^{DT} (F_N^H \otimes I_M),$$

or from $H^{FT}$ as follows

$$H^{DD} = \frac{1}{NM} (F_N \otimes F_M^H)H^{FT} (F_N^H \otimes F_M^{\square}).$$

Unlike the FT domain matrix, $H^{DD}$ is not a diagonal matrix.

The DD domain channel impulse response $\Lambda^{DD} \in C^{M \times N}$, which directly yields the representation of Figure 1, can be obtained via an M-point IFFT on the columns and N-point FFT on the rows of $\Lambda^{FT}$ as:

$$\Lambda^{DD} = \frac{1}{\sqrt{NM}} F_M^H \, \Lambda^{FT} \, F_N.$$

### OFDM and OFTS waveforms

In order to understand the respective advantages and drawbacks of the OFDM and OTFS waveforms, simplified equations of said waveforms are now presented.

The simplification assumes ideal pulse-shaping waveforms.

In the OFDM waveform methodology, a block of data is initially formatted into a transmission frame. A transmission frame in the context of OFDM refers to the structured organization of data in both time and frequency domains for transmission over a communication channel. It consists of $M$ time slots and $N$ frequency bins, where each intersection can carry a piece of data, known as a symbol This representation is denoted as $X = [X_1, \ldots, X_N]$, where $X \in C^{M \times N}$. Then, $X$ is precoded resulting in $s_i^{OFDM} = F_M^H X_i$ and a CP is added. At the receiver side, the inverse operation is applied on the received signal and the CP is removed, leading to the formulation $Y = \Lambda^{FT} \odot X$ where $Y \in C^{M \times N}$.

The effect of the channel is a component-wise product, indicating that each data symbol is affected only by one channel coefficient.

Conversely, in the OTFS waveform methodology, data is initially formatted into $N$ time-domain signals, each of size M, represented as $x = [x_1, \ldots, x_M]^T$, where $x \in C^{MN \times 1}$. Then, $x$ is precoded resulting in $s^{OTFS} = (F_N^H \otimes I_M)x$ and a CP is added. At the receiver side, the inverse operation is applied on the received signal and the CP is removed, leading to the formulation $y = H^{DD} \cdot x$, where $\gamma \in C^{MN \times 1}$.

Unlike for the OFDM signal, a matrix operation is performed, indicating that a data symbol is affected by several channel coefficients.

### Baseline pilot and channel estimation schemes for both waveforms

Baseline pilot and channel estimation schemes in the DD domain are now presented according to a standard approach for both the OFDM and the OTFS waveform.

For the sake of simplicity, it is considered that $M = C_1 \times \alpha_{max}$ while $N = C_1 \times \beta_{max}$. In general, the constant $C_1$ may not be the same for $M$ and $N$. However, this does not impact the rationale of the discussion below.

In the OFDM waveform methodology, the channel is in general estimated in the FT domain without exploiting the DD domain sparsity, as explained in the background art section.

The FT channel estimation is typically performed by combining via e.g., a Wiener filter several frequency domain pilot sequences placed on every $p' \geq 1$ OFDM symbols, to evenly cover the block of N OFDM symbols. The parameter $p'$ is chosen based on the coherence time of the channel.

In the OTFS waveform methodology, the baseline OTFS pilot scheme 200, which is illustrated on Figure 2, consists in placing a single pulse 202 at a given location $(\alpha_1, \beta_1)$ of the DD grid and letting the neighbouring locations empty.

This enables to directly "read" the DD domain channel impulse response at these locations at the receiver side.

*Proposed scheme - Generic implementation mode*

A new pilot insertion scheme is proposed. This scheme, which is called herein the "DD pulse FT domain pilot scheme" may be used for purposes such as channel estimation or target tracking. This scheme is suitable to be combined with OFDM-based waveforms such as OFDM or precoded OFDM (e.g. DFTsOFDM, SS-MC-MA etc).

A generic implementation of this scheme is depicted in Figure 3.

N OFDM-type symbols are generated 302, by a symbol generator, in the FT domain. In other words, the time domain signal, intended for channel transmission, is generated by mapping each symbol of a set of data symbols to one of M allocated subcarriers and an N_FFT-sized IFFT is performed in the frequency domain. These data symbols may be modulation symbols (e.g. APSK, QPSK, etc) or may be pre-coded modulation symbols (e.g. in the frequency/delay domain). Figure 4 illustrates a block 402, for instance an OFDM block, in the FT domain. Since each OFDM symbol uses M subcarriers, i.e. M frequency domain resources, there are at most M*N data symbols in the grid. The data symbols may equally include other types of pilots, control information, or other types of information inserted in the same domain.

Mathematically, the signal X corresponding to the block 402 is represented by a matrix of size $M \times N$.

The average power per OFDM grid sample or data symbol, before potentially reducing the power due to the pilot insertion, is $P_{symb} = \frac{P_{Block}}{MN}$, where $P_{Block}$ is the total allowed average power of the OFDM data block. Figure 4 features a uniform shade of gray to illustrate the optional application of a standard Peak-to-Average Power Ratio (PAPR) constraint, indicating that the energy of each data symbol is close to a mean value of the M*N data symbols.

In addition, a high energy pulse is generated 304, by a pulse generator, in the DD domain. The high energy pulse is a pilot and is defined by a position and a power. The power of the high energy pulse is expressed as $P_{pulse} = C \times P_{symb}$, where $P_{symb}$ is the average power of an OFDM symbol and C a pilot boosting constant to be determined. A representation 502 including the generated high-energy pulse in the DD domain is illustrated in Figure 5. The black symbol 504 represents a DD domain resource with an energy greater than 0. The white symbols represent DD domain resources with energy equal to 0. In this example, the high-energy pulse is represented by the black symbol 504 and corresponds to a single DD domain resource.

Alternately, the high-energy pulse may be formed of a plurality of contiguous DD domain resources with an energy greater than 0 and may be represented by a matrix $P_{DD}$ of size $M \times N$.

The high energy pulse is then converted 306, by a converter, from the DD domain into the FT domain, for instance via regular FFT/IFFT operations. The result of the conversion is a signal representing the high energy pulse in the FT domain and is illustrated on Figure 6 as a pulse block 602. One may notice that the energy of said signal is spread in FT domain. Each of the FT symbols has an energy close to the energy of the DD domain pulse divided by $MN$, i.e. $\approx \frac{C \times P_{symb}}{MN}$. Mathematically, the pilot $P_{FT}$ in the FT domain is represented by a matrix of size $M \times N$. It is not necessary to generate a high energy pulse in the DD domain only to convert it into the FT domain. The mathematical equivalent of the pulse can be directly generated in the FT domain, thereby simplifying the process and avoiding unnecessary conversions.

The gray shade on Figure 6 means that the average energy of the FT symbols resulting of the conversion of the pulse into the FT domain is greater than 0 but not too large compared to the mean energy of the data symbols in the FT domain as represented in Figure 4.

In scenarios where a single pulse is utilized, as in this example, the FT domain equation of the pulse is deterministic and only dependent on the insertion position. This equation can be explicitly formulated and directly implemented in the transmitting device, either as a software-based module or as a hardware-based module.

The FT domain signal to be transmitted is finally obtained by adding 308, as illustrated in Figure 7, the signal X representing the N symbols generated in the FT domain, represented by the block 402 with the pilot $P_{FT}$ representing the high energy pulse converted in the FT domain, represented by the pulse block 602.

The maximum allowed power of the OFDM block is $P_{block}$. However, the pilot is applied atop of the symbols. Hence, the power of the data symbols must be reduced to respect the $P_{Block}$ constraint. Hence, the power of each OFDM symbol must be reduced by a multiplicative quantity of minimum value $\alpha = \left(1 - \frac{C}{MN}\right)$. Indeed, the following triangular inequality applies:

$$P_{Data+pilot} \leq P_{data} + P_{pilot} = P_{symb}\left(1 - \frac{C}{MN}\right) + \frac{C \times P_{symb}}{MN} = P_{Block}.$$

As a result, either $\alpha$ or $C$ can be determined by a power scaling constant which should be determined via simulations.

Mathematically, the signal to be transmitted $X'$ is obtained as $X' = s_1 \times X + s_2 \times P_{FT}$, where $s_1 = \alpha$ and $s_2 = f(C)$ are power scaling constants and the operation + is a component-wise addition.

Optionally data puncturing may be performed on the signal $X$ representing the $N$ symbols generated in the FT domain, as illustrated in Figures 8 and 9. The $N$ OFDM symbols are converted 802 into the DD domain and a*b symbols around a specific location are set 804 to 0. A puncturing window may be defined by an (a,b) integer pair where a and b may each be chosen equal to any positive integer value, for instance 1, 2 or 3. The location of the puncturing window may be determined by an additional parameter c, which specifies a position of the grid, for instance the position of a corner of the grid or another relevant point relative to the high energy pulse location $(\alpha_1, \beta_1)$. Multiple puncturing windows may be associated to the same DD pulse. Then, the punctured signal is converted 806 back into the FT domain. The resulting FT signal $X_{-}$ is then to be added 808 with the pilot $P_{FT}$ representing the high energy pulse in the FT domain, instead of the non-punctured signal $X$.

## *Power of the inserted pulse*

The power of the inserted pulse or pilot, denoted $P_{pulse}$, may be set by the transmitter depending on a variety of parameters, alone or in combination.

For instance, the power may be set based on a communication system configuration, indicated by one or more communication system parameters.

For a fixed, e.g. normalized, overall transmission power, pilot power boosting with respect to a power of the data symbols, denoted $P_{data}$, ensures a tradeoff between channel estimation performance and SNR, which both impact the detection performance.

For instance, $P_{pulse}$ or a boosting factor calculated as $P_{pulse}/P_{data}$ may be set depending on a MCS utilized to encode the data and/or on a resource allocation scheme utilized to allocate the data to corresponding communication resources. Indeed, the DD domain variations of the signal depend on the MCS and resource allocation scheme and setting $P_{pulse}$ to a value averagely above the usual signal peaks in the DD domain ensures easier detection at the receiver side.

Alternatively or in combination, $P_{pulse}$ or the boosting factor $P_{pulse}/P_{data}$ may be set depending on a constant which represents the ratio between the peak power and the average power of the DD domain representation of an OFDM data block, or an indicator providing a similar information.

Alternatively or in combination, $P_{pulse}$ or the boosting factor $P_{pulse}/P_{data}$ may be set depending on a total energy of the data symbols in the DD domain that were punctured when optional data puncturing is employed. The value of $P_{pulse}$ or the boosting factor $P_{pulse}/P_{data}$ may for instance be chosen in such a way that the total transmitted power is not modified as a result of the puncturing.

Alternatively or in combination, $P_{pulse}$ or the boosting factor $P_{pulse}/P_{data}$ may be set depending on measured or computed parameters, for instance channel parameters such as an estimated delay spread or an estimated Doppler spread. The value of $P_{pulse}$ or the boosting factor $P_{pulse}/P_{data}$ may for instance be chosen in such a way that a and b are optimally set to ensure easy estimation.

The pilot boosting constant may also depend on a target normalized means square error (NMSE) of the estimate of the channel and/or on an expected power of the taps of the DD domain channel impulse. An example showing how the pilot boosting constant can be chosen as a function of these parameters is provided below.

## *Example of choice of the pilot boosting constant C*

The SNR per DD tap in the proposed pulse DD scheme is:

$$SNR_{chan.\,esti} = \frac{C \times P_{symb}\,|h_i|^2}{\sigma^2 + Interf\,symb\,OFDM} > \frac{C \times P_{symb}\,|h_i|^2}{\sigma^2 + Cst \times P_{symb}},$$

where $Cst > 1$ is a constant since the OFDM symbol power is not evenly spread in the DD domain.

Figure 10 depicts the power distribution 1002 of the DD domain representation of an OFDM block. The average power per symbol is 1 and the peak power is slightly below 4. This shows for instance that a value $Cst \approx 4$ is adequate in this specific realization.

Then, the mean square error (MSE) is expressed as

$$\frac{1}{MSE} = SNR_{chan.\ esti}$$

and the normalized MSE (NMSE) is expressed as

$$NMSE = \frac{MSE}{|h_i|^2} = \frac{1}{SNR\ |h_i|^2},$$

where $|h_i|^2$ is the power of a given tap of the DD domain channel impulse response.

For a target NMSE, a value of the pilot boosting constant $C$ is then expressed as

$$C = \frac{1}{NMSE} \times \frac{\sigma^2 + Cst \times P_{symb}}{P_{symb}\ |h_i|^2}.$$

### _Position of the inserted pulse_

The position of the inserted pulse denoted $(\alpha_1, \beta_1)$ may be set randomly or depending on a power of the data transmitted in the same frame. For instance, the pulse may be inserted in a position where the data power in the DD domain is lower or below a given threshold. For instance, the pulse may be inserted in the position where the average data power in the DD domain in a pre-determined rectangular window around the insertion position is lowest or below a given threshold.

### _Additional puncturing location(s) - Example of a tracking window_

Optionally, one or more additional locations where data is punctured may be inserted in the DD domain away from the position of the inserted pulse $(\alpha_1, \beta_1)$.

The one or more additional locations may be used as a tracking window, which allows tracking a moving object with low complexity by giving the possibility to accurately estimate specific values of potential DD taps of the channel impulse response and may be utilized alone or in combination with one or more puncturing windows associated to the inserted pulse.

The position of the one or more additional locations may depend on one or more parameters of a radio path between the transmitter and a receiver or on one or more parameters of a plurality of radio paths between the transmitter and a plurality of receivers. Parameters of a radio path may include channel characteristics. The utilization of channel characteristics to select the position of the one or more additional locations may contribute in enhancing transmission performance. Further, parameters of a radio path may include characteristics of a moving target such as position, speed and/or distance. The utilization of characteristics of a moving target to select the position of the one or more additional locations is particularly appropriate to allow using the one or more additional locations as a tracking window for tracking the moving target. The parameters of a radio path may be for instance previously detected or estimated or signaled by another user or network node.

For instance, to detect or refine the speed of a moving object when the distance is known, the supplementary tracking window may be inserted with a=1 and b>1, where the relative position in the delay domain between the window and $\alpha_1$ depends on the known distance

For instance, to detect or refine the distance to an object when the object is static or when its speed is known, the supplementary tracking window may be inserted with b=1 and a>1, where the relative position in the Doppler domain between the window and $\beta_1$ depends on the known distance.

### _Insertion in part of a frame_

In a variant, the pulse is inserted in a part of the frame to be transmitted, and the processing for inserting the pulse is made on a fraction of $M'N' < MN$ elements of a frame, with $M' \leq M$ and $N' \leq N$. Thus, a faster and/or lower complexity estimation can be performed, at the expense of a lower resolution of the estimates. This choice can be beneficial when reducing the estimation resolution in one or both domains is acceptable given the channel profile. $M'$ and/or $N'$ can be conveniently chosen based on known values such as $M, N,$ other RS positions, or internal parameters such as estimated or long-term channel characteristics.

For example, $M'$ can be expressed as $M' = min(M\_fixed, M)$, where $M\_fixed$ is a predetermined or fixed value acting as a threshold or upper limit for $M$ and where $M\_fixed$ is chosen to optimize the trade-off between resolution in the delay domain and computational complexity in scenarios with large allocations of subcarriers.

In another example, if $M'$ and/or $N'$ are chosen based on the characteristics of a forward error correcting code using block segmentation such as the pulse is inserted within a segment of the code, channel estimation is available at the receiver in the early stages of the detection and decoding is accelerated.

In a variant, M' and/or N' are chosen based on insertion positions of other reference signals, as explained below.

*Mix of DD and FT RS*

The insertion of the pulse can be conveniently combined with an insertion of one or more regular reference signals (RS, e.g. DMRS) with the purpose of refining channel estimation in some particular cases or for sensing purposes such as tracking objects.

For example, in the case of a highly frequency selective channel with a large number of paths and high Doppler effects, a convenient pilot pattern may involve a combination of a regular RS (e.g. DMRS) inserted in the FT domain (e.g. one single DMRS, or two consecutive DMRS for a high number of MIMO layers) complemented by the pulse in the DD domain. This approach offers reduced overhead compared to using multiple (e.g. 3, 4) FT pilots in a conventional manner. Moreover, if the pulse is inserted before an OFDM symbol carrying a DMRS (i.e., choosing N' such that it is less than the index of the OFDM symbol with DMRS), the combined use of the DD pulse and FT pilots allows for channel estimation at the receiver before the end of the frame, thereby accelerating the decoding process.

In a similar example the DD pilot might be spread over a fraction of the frequency domain comprised between a subcarrier $M1$ and $M2 = M1 + M'$, where $M1$ and $M2$ may be RS insertion indexes in the frequency domain or point to the first/last available subcarrier. When prior channel knowledge is available, $M'$ may be chosen depending on the channel's maximum delay spread or depending on channel quality. In the latter case, the pulse facilitates high quality tracking/sensing, with channel estimation being performed based e.g. on other RS, like DMRS.

Figure 11 illustrates a mix of FT pilot insertion and a pulse insertion in a frame. Resources 1102 appearing hatched represent RS inserted in one or more symbols or on one or more subcarriers in the FT domain, resources 1104 appearing in light grey represent un-altered data and resources 1106 appearing in dark grey represent a mix of data and pilot(s) inserted in the DD domain.

*Number of DD pulses*

It is also possible to include a pilot signal with several DD pulses 1202, 1204, as illustrated in the DD domain on Figure 12.

In the same way as depicted in Figure 3, the pilot signal is converted 306 into the FT domain and the result of the conversion, which is a pilot $P_{FT}$ representing the high energy pulses converted in the FT domain, is added 308 with the signal $X$ representing the $N$ symbols generated in the FT domain.

At the receiver side, this enables to perform several estimates of the channel impulse response. A final estimate can for instance be obtained as an average of the estimates performed for each pulse.

*Theoretical performance analysis*

Some theoretical elements are now provided to demonstrate the competitivity of the proposed new pilot scheme compared to a regular OFDM pilot scheme.

Common technical background and notations are detailed as following.

Using Shannon formula, the theoretical rate of a pilot scheme without reference signals (e.g., using a genie for channel estimate) can be expressed as

$$Rate_{tot} = nb\ symb\ Data\ x\ log(1 + SINR)$$

where *nb symb Data* is a number of data symbols to be transmitted along with the pilot, expressed as *nb symb Data* $= M \times N$ for a block of M subcarriers and $N$ OFDM symbols (if no FT domain pilot is used), e.g. when $M = 256$ and $N = 20$, then $MN = 5120$,

SINR is a signal to noise and interference ratio expressed as $SINR = \frac{P_{data}}{\sigma^2 + Interf\ power}$,

$P_{data}$ is the average power per data symbol, here equal to $P_{symb}$ as no FT domain pilot is used

$\sigma^2$ is a measure or an estimate of the power of a noise, and

*Interf power,* which is set to 0 in the baseline scheme, is formally a measure or an estimate of a power of an interference source.

A fixed total transmission power of $P_{block} = P_{symb} \times MN$ is also considered.

The benchmark OFDM pilot scheme, as detailed in the section "Baseline pilot and channel estimation schemes for both waveforms" and illustrated on Figure 13, includes reference signals 1302 which are represented as black slots and which are periodically spaced by the subsampling factor $\frac{M}{\alpha_{max}}$, $\alpha_{max}$ being the maximum delay spread, and $\frac{M}{\beta_{max}}$, $\beta_{max}$ being the maximum Doppler spread, in frequency and time domain, respectively. The number of reference signals is therefore $\alpha_{max} \times \beta_{max}$. The subsampling factor is 3 in this example, both for the frequency domain and the time domain. The pilot enables to reconstruct the delay-Doppler channel impulse response without aliasing via a 2D FFT IFFT on the received reference signals. The power per reference signal is denoted as $P_{RS}$. The number of OFDM pilots required is estimated as: $nb\ pilot \approx \alpha_{max} \times \beta_{max}$ (max delay spread and max Doppler spread). We denote by $P_{Pilot}$ the power of each pilot, where this power is chosen such that channel estimate is good enough (see below where $P_{Pilot}$ is expressed as a function of $C$).

The SINR calculation with the benchmark OFDM pilot scheme is estimated as:

$$SINR_{stand} = \frac{P_{symb} - \frac{nb\ pilot \times (P_{Pilot} - Psymb)}{MN}}{\sigma^2}.$$

For a comparable estimation quality between the two schemes, the value of $P_{Pilot}$ should be chosen as $\frac{nb\ Pilot \times P_{Pilot}}{\sigma^2} = \frac{C \times P_{symb}}{\sigma^2 + 4 \times P_{symb}}$, which corresponds to the SINR of the channel estimation scheme, which should not be confused with the SINR of the data (as e.g., $SINR_{stand}$). This implies

$$P_{Pilot} = \frac{C \times P_{symb}\sigma^2}{(\sigma^2 + 4 \times P_{symb})nb\ Pilot}.$$

The SINR of the new proposed pilot scheme is approximated considering the power of the DD pulse as $C \times P_{symb}$, with C being a pilot boosting constant such that the channel estimate is good enough according to the criteria set out in the section "Example of choice of the pilot boosting constant C". Given a fixed total transmit power, the average allowed power per data symbol is lower bounded by $P_{symb}\left(1 - \frac{C}{MN}\right)$. The average generated interference by the pilots on the data symbols in the FT domain is: $\frac{C}{MN}P_{symb}$. As a result, the resulting SINR of the data symbol is approximated as

$$SINR_{DD\ pulse} = \frac{P_{symb}\left(1 - \frac{C}{MN}\right)}{\sigma^2 + \frac{C}{MN}P_{symb}}.$$

Using the results of the SINR approximations for both schemes, the achievable rates can be estimated, where the parameters of both schemes are chosen to have a similar estimation quality.

With the benchmark OFDM pilot scheme, the achievable rate is expressed as

$$R_{standard} = \frac{MN - nb\ pilot}{MN} \times \log(1 + SINR_{stand})$$

With the new proposed pilot scheme, the achievable rate is expressed as

$$R_{DD} = \frac{MN}{MN} \times \log(1 + SINR_{DD\ Pulse})$$

With the standard pilot scheme, a linear penalty is observed. There is no additional noise in the SNR term, but a reduced number of data symbols. With the new proposed pilot scheme, the penalty is within the log function: there is the same number of data symbols but an increased noise in the SINR. Hence, the new proposed pilot scheme is expected to exhibit a lower penalty than the benchmark OFDM pilot scheme in the high-power regime.

# EP 4 672 685 A1

**Claims**

1. A communication method, comprising:

    determining a composite signal, the composite signal representing a sum of symbols associated with frequency-time resources and of a pilot representative of at least one pulse in a delay-Doppler domain; wherein the symbols associated with frequency-time resources comprise at least data symbols and
    transmitting the composite signal through a radio channel.

2. The method of claim 1, wherein at least one said pulse has a power in the delay-Doppler domain which is a function of at least one of:

    a total power of the symbols,
    a modulation and coding scheme associated with the symbols,
    a resource allocation parameter associated with the symbols,
    an indicator representative of a distribution of power of a representation in the delay-Doppler domain of the sum of the symbols,
    an observed or computed channel condition,
    a target normalized mean square error of an estimate of the channel, and
    an expected power of a channel impulse in the delay-Doppler domain.

3. The method of claim 1 or 2, wherein at least one said pulse has a position in the delay-Doppler domain which depends on at least one of:

    a characteristic of a block of data to be transmitted through the radio channel,
    a location in the delay-Doppler domain where a power of the symbols is lowest at a pre-determined position, and
    a location in the delay-Doppler domain where an average power of the symbols is lowest within a predetermined area
    a location in the delay-Doppler domain related to a power distribution of the symbols.

4. The method of any one of claims 1 to 3, wherein, for each pulse, the symbols are punctured or attenuated at one or more locations of puncturing or attenuation related to a location of a pulse in the delay-Doppler domain.

5. The method of any one of claims 1 to 4, wherein the symbols are based on an OFDM-based waveform.

6. The method of any one of claims 1 to 5, wherein the symbols are further punctured or reduced at one or more additional locations distinct from and unrelated to a location of a pulse in the delay-Doppler domain.

7. The method of claim 6, wherein the at least one of the one or more additional locations has a position which depends on a path parameter of a radio path between a transmitter of the composite signal and a receiver of the composite signal.

8. The method of any one of claims 1 to 7, wherein the composite signal corresponds to a transmission frame comprising a first part and a second part, and wherein the sum of the symbols and of the representation of the pulse extends throughout the first part of the transmission frame and does not extend to the second part of the transmission frame.

9. The method of any one of claims 1 to 8, wherein the symbols associated with frequency-time resources comprise a reference signal acting as a reference in the frequency-time domain.

10. The method of claim 9, wherein at least one of:

    - a power and/or a position of the reference signal in the frequency-time domain, and
    - a power and/or a position of the pulse in the delay-Doppler domain is based on an observed channel condition.

11. A computer-readable medium storing instructions that, when executed by a processor, cause the processor to perform the method of any one of claims 1 to 10.

12. A signal transmitter configured to

determine a composite signal in a frequency-time domain, the composite signal representing a sum of data symbols associated with frequency-time resources and of a pilot representative of at least one pulse in a delay-Doppler domain; and

transmit the composite signal through a radio channel.

13. A signal receiver configured to receive the composite signal transmitted by the signal transmitter of claim 12 and to estimate the communication channel in the delay-Doppler domain based on the composite signal.

14. A communication system comprising the signal transmitter of claim 12 and the signal receiver of claim 13.

Doppler domain

Delay domain

102

104

100

**FIG. 1**

Doppler domain

$2\beta_{max}$

Delay domain

$2\alpha_{max}$

Guard

202

Data symbol

200

**FIG. 2**

**FIG. 3**

Time domain (**size N**)

Frequency domain (**size M**)

402

**FIG. 4**

Doppler domain (**size N**)

Delay domain (**size M**)

504

502

**FIG. 5**

Time domain (**size N**)

Frequency domain (**size M**)

602

**FIG. 6**

Time domain (**size N**)

Frequency domain (**size M**)

402

+

Time domain (**size N**)

Frequency domain (**size M**)

602

**FIG. 7**

Time domain (__size N__)

Frequency domain (__size M__)

402

Original data in the FT domain

(802) IFFT on columns
FFT on rows

Doppler domain (__size N__)

Delay domain (__size M__)

(804)

Puncturing in the DD domain

(806) FFT on columns
IFFT on rows

Time domain (__size N__)

Frequency domain (__size M__)

Altered data in the FT domain

**FIG. 8**

FT SYMBOL GENERATION / $X$ — 302

802 — FT SYMBOL CONVERSION TO DD

804 — PUNCTURING DD CONVERTED FT SYMBOL

DD PULSE GENERATION / $P_{DD}$ — 304

806 — PUNCTURED DD CONVERTED FT SYMBOL CONVERSION TO FT / $X_-$

DD PULSE CONVERSION TO FT / $P_{FT}$ — 306

808 — ADDITION / $X_- + P_{FT}$

**FIG. 9**

**FIG. 10**

**FIG. 11**

Doppler domain (**size N**)

**FIG. 12**

Time domain (**size N**)

1302

**FIG. 13**

Europäisches
Patentamt

European
Patent Office

Office européen
des brevets

# EUROPEAN SEARCH REPORT

**Application Number**

EP 24 29 0022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAGLIAFERRI DARIO ET AL: "Integrated Sensing and Communication System via Dual-Domain Waveform Superposition", IEEE TRANSACTIONS ON WIRELESS COMMUNICATIONS, IEEE SERVICE CENTER, PISCATAWAY, NJ, US, vol. 23, no. 5, 26 September 2023 (2023-09-26), pages 4284-4299, XP011969991, ISSN: 1536-1276, DOI: 10.1109/TWC.2023.3316888 [retrieved on 2023-09-26] * Sections III., IV. and V. * * figures 1,2 * | 1-14 | INV. H04L27/26 H04W52/32 |
| A | WO 2018/191309 A1 (COHERE TECH INC [US]) 18 October 2018 (2018-10-18) * paragraph [0061] - paragraph [0075]; figures 4-7 * * paragraph [0080] - paragraph [0086]; figures 11-14 * | 1-14 | |
| X | US 11 418 300 B2 (COHERE TECH INC [US]) 16 August 2022 (2022-08-16) * Section 3.; figures 8,9 * | 1,5,8,9, 11-14 | TECHNICAL FIELDS SEARCHED (IPC) H04L H04W |
| A | WO 2024/020274 A1 (QUALCOMM INC [US]) 25 January 2024 (2024-01-25) * paragraph [0076] - paragraph [0110]; figures 3-5 * | 1-14 | |

-/--

The present search report has been drawn up for all claims

| Place of search | Date of completion of the search | Examiner |
|---|---|---|
| Berlin | 26 November 2024 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                     

& : member of the same patent family, corresponding document

EPO FORM 1503 03.82 (P04C01)

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHOU ZHOU ET AL: "Learning to Equalize OTFS", ARXIV.ORG, CORNELL UNIVERSITY LIBRARY, 201 OLIN LIBRARY CORNELL UNIVERSITY ITHACA, NY 14853, 17 July 2021 (2021-07-17), XP091012831, * Section III.; figures 5-7 * ----- | 1-14 | |

TECHNICAL FIELDS
SEARCHED      (IPC)

The present search report has been drawn up for all claims

| Place of search | Date of completion of the search | Examiner |
|---|---|---|
| Berlin | 26 November 2024 | Chave, Julien |

EPO FORM 1503 03.82 (P04C01)

## ANNEX TO THE EUROPEAN SEARCH REPORT
## ON EUROPEAN PATENT APPLICATION NO.

EP 24 29 0022

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2024

| Patent document cited in search report | Publication date | Patent family member(s) | | Publication date |
|---|---|---|---|---|
| WO 2018191309 A1 | 18-10-2018 | EP | 3610582 A1 | 19-02-2020 |
| | | US | 2023164013 A1 | 25-05-2023 |
| | | WO | 2018191309 A1 | 18-10-2018 |
| US 11418300 B2 | 16-08-2022 | US | 2021250138 A1 | 12-08-2021 |
| | | US | 2022385509 A1 | 01-12-2022 |
| | | WO | 2019241436 A1 | 19-12-2019 |
| WO 2024020274 A1 | 25-01-2024 | US | 2024031089 A1 | 25-01-2024 |
| | | WO | 2024020274 A1 | 25-01-2024 |

EPO FORM P0459

For more details about this annex : see Official Journal of the European Patent Office, No. 12/82